# EUROPÄISCHE PATENTSCHRIFT

(11) **EP 2 013 067 B1**
(45) Veröffentlichungstag und Bekanntmachung des Hinweises auf die Patenterteilung: **23.06.2010**
(21) Anmeldenummer: 07723860.8
(22) Anmeldetag: 31.03.2007
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 02.05.2006 DE 102006020650
(43) Veröffentlichungstag der Anmeldung: 14.01.2009
(73) Patentinhaber: ThyssenKrupp Presta Aktiengesellschaft, 9492 Eschen (LI)
(72) Erfinder: KLUKOWSKI, Christoph, CH-8880 Walenstadt (CH)
(74) Vertreter: Hofmann, Ralf U.
(86) Internationale Anmeldenummer: PCT/EP2007/002919
(87) Internationale Veröffentlichungsnummer: WO 2007/124831

(56) Entgegenhaltungen:
- EP-A1- 1 060 974
- WO-A-01/32494
- DE-A1-102004 041 649

## Beschreibung

Die Erfindung betrifft eine Lenksäule für ein Kraftfahrzeug mit einer drehbar gelagerten Lenkspindel, einer die Lenkspindel tragenden Trageinheit und einer Montageeinheit zur Befestigung der Lenkspindel am Chassis des Kraftfahrzeugs, wobei die Trageinheit im Crashfall gegenüber der Montageeinheit verschiebbar ist und eine zwischen der Trageinheit und Montageeinheit wirkende Energieabsorptionseinrichtung zur Energieabsorption bei der Verschiebung der Trageinheit gegenüber der Montageeinheit im Crashfall vorhanden ist.

Lenksäulen von Kraftfahrzeugen müssen heutzutage die Sicherheitsfunktion aufweisen, dass sie im Falle eines Fahrzeugcrashs kollabieren können. Der das Lenkrad tragende Endabschnitt der Lenksäule muss hierzu vom Fahrer weg verschiebbar sein. Bei dieser Verschiebung soll Energie in kontrollierter Weise absorbiert werden. Die Lenksäule wirkt hierbei wie ein Puffer, welcher den Fahrer über einen maximal zur Verfügung stehenden Crashweg abbremst. Dadurch wird ein Teil der Bewegungsenergie des Fahrers von der Lenksäule aufgenommen (absorbiert).

Bei einer herkömmlichen Lenksäule dieser Art ist die Lenkspindel in einem Mantelrohr drehbar gelagert, welches von einer Trageinheit getragen wird. Im geöffneten Zustand einer Klemmvorrichtung ist das Mantelrohr in der Höhe, teilweise auch in achsialer Richtung der Lenkspindel gegenüber der Trageinheit verstellbar, um die Position des Lenkrads einzustellen (Komfortfunktion der Lenksäule). Im geschlossenen Zustand der Klemmvorrichtung ist die eingestellte Position fixiert, möglichst auch im Crashfall. Die Trageinheit ist nach Art eines Schlittens in einer Montageeinheit in Längsrichtung der Lenkspindel verschiebbar geführt. Die Montageeinheit dient zur Befestigung der Lenksäule am Chassis des Kraftfahrzeugs. Zwischen der Montageeinheit und der Trageinheit wirkt eine Energieabsorptionseinrichtung zur Energieabsorption bei der Verschiebung der Trageinheit gegenüber der Montageeinheit im Crashfall. Im Normalbetrieb verhindert diese Energieabsorptionseinrichtung eine solche Verschiebung zwischen der Trageinheit und der Montageeinheit. Die Energieabsorptionseinrichtung weist beispielsweise ein Energieabsorptionsteil in Form eines umgebogenen Blechstreifens auf, der einerseits an der Trageinheit, andererseits an der Montageeinheit befestigt ist. Im Crashfall wird Energie durch Biegungsarbeit des Blechstreifens aufgenommen. Gegebenenfalls kann der Blechstreifen Aufreißlinien aufweisen, entlang von denen er im Crashfall aufgerissen wird, wobei weitere Energie absorbiert wird. Eine solche Reißbiegelasche kann relativ viel Energie aufnehmen, wobei die Energieaufnahme (vor allem für das Biegen) gut reproduzierbar ist und durch die Variation der Blechdicke im Kraftniveau gut einstellbar ist.

Herkömmlicherweise ist eine derartige im Crashfall Energie absorbierende Lenksäule für einen erwachsenen, ca. 78 kg schweren angegurteten Mann ausgelegt. Für leichtere oder schwerere Lenker wird somit kein optimaler Aufprallschutz erreicht. Auch weitere wichtige Einflussgrößen, wie z.B. Tragen oder Nichttragen des Sicherheitsgurts, Positionierung des Lenkrads, Sitzposition, Aufprallwinkel und Fahrzeuggeschwindigkeit können nicht berücksichtigt werden.

Bekannt ist weiters bereits ein Energieabsorptionsteil, dessen Energieabsorption in zwei Stufen einstellbar ist, und zwar mittels eines pyrotechnischen Elements, von dem ein Bolzen herausziehbar ist, wobei im eingesetzten und herausgezogenen Zustand des Bolzens unterschiedliche Verformungen des Energieabsorptionsteils im Crashfall stattfinden können. Dadurch kann eine Anpassung in Abhängigkeit davon erreicht werden, ob der Fahrer angegurtet ist oder nicht.

Bekannt sind weiters Energieabsorptionseinrichtungen, bei welchen ein Schlitz in einem Deformationsteil mittels eines den Schlitz durchsetzenden Bolzens aufgeweitet wird, wenn im Crashfall eine Verschiebung des Bolzens gegenüber dem Deformationsteil erfolgt, vgl. z.B. EP 0 633 180 B1 und EP 1 083 109 A2.

In der EP 1 060 974 B1 und DE 10 2004 009 726 A1 wurden weiters bereits hydraulisch wirkende Dämpfer für die Energieabsorption beim Zusammenschieben einer Lenksäule im Crashfall vorgeschlagen. Zur Einstellung der Energieaufnahme dient eine in ihrer Größe elektronisch variierbare Öffnung, durch welche das Dämpfungsfluid strömt oder es wird zu diesem Zweck die Viskosität des Dämpfungsfluids verändert. Dazu werden magnetorheologische oder elektrorheologische Flüssigkeiten eingesetzt, bei denen die Viskosität dadurch geändert werden kann, dass die Flüssigkeit mit einem magnetischen bzw. elektrischen Feld unterschiedlicher Stärke beaufschlagt wird. Hydraulische Dämpfungssysteme sind aber u.a. in Hinblick auf die Kosten nachteilig.

Die DE 102 00 826 C1 beschreibt ein Lenkmodul für ein Steer-By-Wire-Lenksystem eines Kraftfahrzeuges. Das Lenkrad ist hier mit der Kolbenstange eines in einem Zylinderraum angeordneten Kolbens verbunden. Zur Änderung der Kraft, mit der der Kolben im Zylinderraum verschiebbar ist, kann der Zylinderraum mit einer magnetorheologischen oder elektrorheologischen Flüssigkeit befüllt sein, deren Viskosität mittels eines magnetischen bzw. elektrischen Feldes beeinflussbar ist.

Es wurde weiters bereits vorgeschlagen, Flüssigkeiten, deren Viskosität durch ein magnetisches oder elektrisches Feld beeinflussbar ist, für Klemmmechanismen von verstellbaren Lenksäulen einzusetzen, durch die die eingestellte Position der Lenksäule fixierbar ist (DE 103 15 642 A1 und WO02/12049 A1).

Aus der DE 10 2005 025 631 A1 ist eine Haubenbaugruppe eines Kraftfahrzeuges unter Verwendung von auf aktivem Material basierenden Mechanismen bekannt. Als aktive Materialien werden unter anderem Legierungen mit Gedächtnisfunktion (SMA), Magnetlegierungen mit Gedächtnisfunktion, Polymere mit Gedächtnisfunktion (SMP), piezoelektrische Materialen, e-lektroaktive Polymere (EAP), magnetorheorologische Fluide und Elastomere (MR) und e-lektrorheologische Fluide (ER) genannt. Das aktive Material wird in einem energieabsorbierenden Polster der Haubenbaugruppe eingesetzt. Eine solche Haubenbaugruppe betrifft ein außerhalb der Fahrgastzelle des Kraftfahrzeugs liegendes Fahrzeugteil, bei dem die durch einen Aufprall verursachte Verletzungsgefahr, insbesondere für Fußgänger verringert werden soll. An solche Haubenbaugruppen sind ganz andere Anforderungen als an Lenksäulen für Kraftfahrzeuge gestellt.

Aufgabe der Erfindung ist es, eine Lenksäule der eingangs genannten Art bereitzustellen, bei der die Energieabsorption der zwischen der Trageinheit und Montageeinheit wirkenden Energieabsorptionseinrichtung anpassbar ist, beispielsweise an das Gewicht des Fahrers. Erfindungsgemäß gelingt dies durch eine Lenksäule mit den Merkmalen des Anspruchs 1.

Die zwischen der Trageinheit und Montageeinheit wirkende Energieabsorptionseinrichtung umfasst somit mindestens ein Energieabsorptionsteil aus einem magnetorheologischen Elastomer, welches im Crashfall bei einer Verschiebung zwischen der Trageinheit und der Montageeinheit verformt wird. Durch diese Verformung wird Energie absorbiert. Die Elastizität des Energieabsorptionsteils kann hierbei durch ein mehr oder weniger starkes magnetisches Feld verändert werden, das auf das Energieabsorptionsteil einwirkt. Dadurch kann die Energieabsorption der Energieabsorptionseinrichtung angepasst werden, beispielsweise hinsichtlich des Gewichtes des Fahrers und/oder weiterer Einflussgrößen.

Durch die Erfindung wird eine hinsichtlich ihrer Energieabsorption adaptive Lenksäule bereitgestellt, die einfach und kostengünstig ausgebildet sein kann. Für die Energieabsorption kann eine gute Reproduzierbarkeit und Langzeitstabilität erreicht werden.

Eine mögliche Ausführungsform sieht vor, dass die Einrichtung zur Erzeugung des magnetischen Feldes mindestens einen Elektromagneten umfasst.

In einer vorteilhaften Ausführungsform der Erfindung wird das mindestens eine aus einem magnetorheofogischen Elastomer bestehende Energieabsorptionsteil bei seiner Verformung im Crashfall gebogen. Hierbei kann dieses Energieabsorptionsteil günstigerweise plattenförmig oder in Form eines in Längsrichtung der Lenkspindel sich erstreckenden Streifens ausgebildet sein, wobei die Biegung um eine quer zur Längsrichtung der Lenkspindel liegende Biegeachse erfolgt. Das Energieabsorptionsteil ist zu diesem Zweck unmittelbar oder mittelbar einerseits mit der Trageinheit, andererseits mit der Montageeinheit verbunden. Vorzugsweise ist das aus dem magnetorheologischen Elastomer bestehende Energieabsorptionsteil an einem, insbesondere plattenförmigen, Trägerteil angebracht, welches einerseits mit der Trageinheit, andererseits mit der Montageeinheit verbunden ist, wobei das Trägerteil und das Energieabsorptionsteil gemeinsam gebogen werden. Die vorzugsweise rechtwinklig zur Lenkspindel liegende Biegeachse kann sich hierbei während der Verschiebung der Trageinheit gegenüber der Montageeinheit verschieben (bei einer "freien Biegung") oder gegenüber einem der beiden Einheiten stationär bleiben, wobei das Trägerteil mit dem mindestens einen Energieabsorptionsteil von der anderen der beiden Einheiten um eine Kante dieser Einheit gezogen wird. Beide Möglichkeiten sind für herkömmliche Biegelaschen aus Metall bekannt.

In einer weiteren Ausführungsform der Erfindung ist vorgesehen, dass eine Kompression des mindestens einen aus einem magnetorheologischen Elastomer bestehenden Energieabsorptionsteils erfolgt, wobei diese Kompression durch ein Kompressionsteil erfolgt, welches sich im Crashfall gegenüber dieses Energieabsorptionsteil verschiebt. Beispielsweise kann sich das Kompressionsteil in Längsrichtung der Lenkspindel verschieben und hierbei auf mindestens eine in Längsrichtung der Lenkspindel sich erstreckende Oberfläche des Energieabsorptionsteils komprimierend einwirken. Die Kompression des Energieabsorptionsteils erfolgt somit quer zur Bewegungsrichtung des Kompressionsteils im Crash-Fall, also quer zur Längsrichtung der Lenkspindel.

In einer weiteren Ausführungsform der Erfindung ist vorgesehen, dass im mindestens einen aus einem magnetorheologischen Elastomer bestehenden Energieabsorptionsteil, vorzugsweise stabförmige, Widerstandselemente eingebettet sind, die mit ihren freien Enden aus dem Energieabsorptionsteil herausstehen. Mit diesen wirkt ein Schubteil zusammen, welches bei einer Verschiebung der Trageinheit gegenüber der Montageeinheit an die herausstehenden Abschnitte der Widerstandselemente anläuft, sodass diese unter Verformung des magnetorheologischen Materials ausgelenkt werden. Mittels eines veränderbaren Magnetfelds ist die dabei geleistete Arbeit einstellbar.

Magnetorheologische Elastomere sind bekannt. Beispielsweise wird auf folgende Veröffentlichungen und die in diesen Veröffentlichungen zitierten Publikationen verwiesen: Journal of the Mechanics and Physics of Solids 52 (2004) 2869-2908 "On finitely strained magnetorheological elastomers", S.V. Kankanala et al. (ELSEVIER); Polymer Testing 23 (2004) 347-353, "Magnetoactive elastomer composites", M. Farshad et al. {ELSEVIER}; Polymer Testing 24 (2005) 163-168, "Compression properties of magnetostrictive polymer composite gels", M. Farshad et al. (ELSEVIER).

Eine mögliche Ausbildung sieht vor, dass die Trageinheit gegenüber der Montageeinheit mittels einer Verschiebeführung in Längsrichtung der Lenkspindel verschiebbar geführt ist.

Weitere Vorteile und Einzelheiten der Erfindung werden im Folgenden anhand der beiliegenden Zeichnung erläutert. In dieser zeigen:
- Fig. 1: ein Ausführungsbeispiel einer Lenksäule mit einer Energieabsorptionseinrichtung ge- mäß dem Stand der Technik, in Schrägsicht;
- Fig. 2: einen Schnitt entlang der Linie A-A von Fig. 1;
- Fig. 3: eine Schrägsicht einer erfindungsgemäßen Energieabsorptionseinrichtung;
- Fig. 4: eine Schrägsicht der Energieabsorptionseinrichtung von Fig. 3 aus einer anderen Blick- richtung;
- Fig. 5: einen Schnitt entlang der Linie B-B von Fig. 3, wobei auch weitere Teile der Lenksäule schematisch dargestellt sind;
- Fig. 6: und Fig. 7 Schrägsichten aus unterschiedlichen Blickwinkeln einer modifizierten Ausfüh- rungsform der erfindungsgemäßen Energieabsorptionseinrichtung;
- Fig. 8: und Fig. 9 Schrägsichten aus verschiedenen Blickrichtungen einer dritten Ausführungs- variante einer erfindungsgemäßen Energieabsorptionseinrichtung;
- Fig. 10: eine Schrägsicht einer vierten Ausführungsvariante einer erfindungsgemäßen Energie- absorptionseinrichtung;
- Fig. 11: eine Schrägsicht des Kompressionsteils;
- Fig. 12: eine Schrägsicht entsprechend Fig. 10, nach einem Crash;
- Fig. 13: eine Schrägsicht einer fünften Ausführungsvariante einer erfindungsgemäßen Energie- absorptionseinrichtung;
- Fig. 14: einen Schnitt entlang der Linie C-C von Fig. 13;
- Fig. 15: die Energieabsorptionseinrichtung von Fig. 13 und Fig. 14 nach einem Crash;
- Fig. 16: einen Schnitt entlang der Linie D-D von Fig. 15;
- Fig. 17: eine Schrägsicht einer sechsten Ausführungsvariante einer erfindungsgemäßen Ener- gieabsorptionseinrichtung;
- Fig. 18: einen Schnitt entlang der Linie E-E von Fig. 17;
- Fig. 19: eine Schrägsicht der Energieabsorptionseinrichtung von Fig. 17 nach einem Crash;
- Fig. 20: einen Schnitt entlang der Linie F-F von Fig. 19;
- Fig. 21: eine Schrägsicht einer siebten Ausführungsvariante einer erfindungsgemäßen Energie- absorptionseinrichtung;
- Fig. 22: die Energieabsorptionseinrichtung von Fig. 21 nach einem Crash;
- Fig. 23: eine Schrägsicht einer achten Ausführungsvariante einer erfindungsgemäßen Energie- absorptionseinrichtung;
- Fig. 24: die Energieabsorptionseinrichtung von Fig. 23 nach einem Crash;
- Fig. 25: eine Schrägsicht einer neunten Ausführungsvariante einer erfindungsgemäßen Ener- gieabsorptionseinrichtung;
- Fig. 26: die Energieabsorptionseinrichtung von Fig. 25 nach einem Crash;
- Fig. 27: eine Schrägsicht einer zehnten Ausführungsvariante einer erfindungsgemäßen Ener- gieabsorptionseinrichtung;
- Fig. 28: die Energieabsorptionseinrichtung von Fig. 27 nach einem Crash;
- Fig. 29: eine Schrägsicht einer elften Ausführungsvariante einer erfindungsgemäßen Energie- absorptionseinrichtung;
- Fig. 30: das Kompressionsteil der Energieabsorptionseinrichtung von Fig. 29;
- Fig. 31: einen Schnitt entlang der Linie G-G von Fig. 29;
- Fig. 32: die Energieabsorptionseinrichtung von Fig. 29 nach einem Crash;
- Fig. 33: einen Schnitt entlang der Linie H-H von Fig. 32;
- Fig. 34: eine Schrägsicht einer zwölften Ausführungsvariante einer erfindungsgemäßen Ener- gieabsorptionseinrichtung;
- Fig. 35: einen Schnitt entlang der Linie I-I von Fig. 34;
- Fig. 36: die Energieabsorptionseinrichtung von Fig. 334 nach einem Crash;
- Fig. 37: einen Schnitt entlang der Linie J-J von Fig. 36.

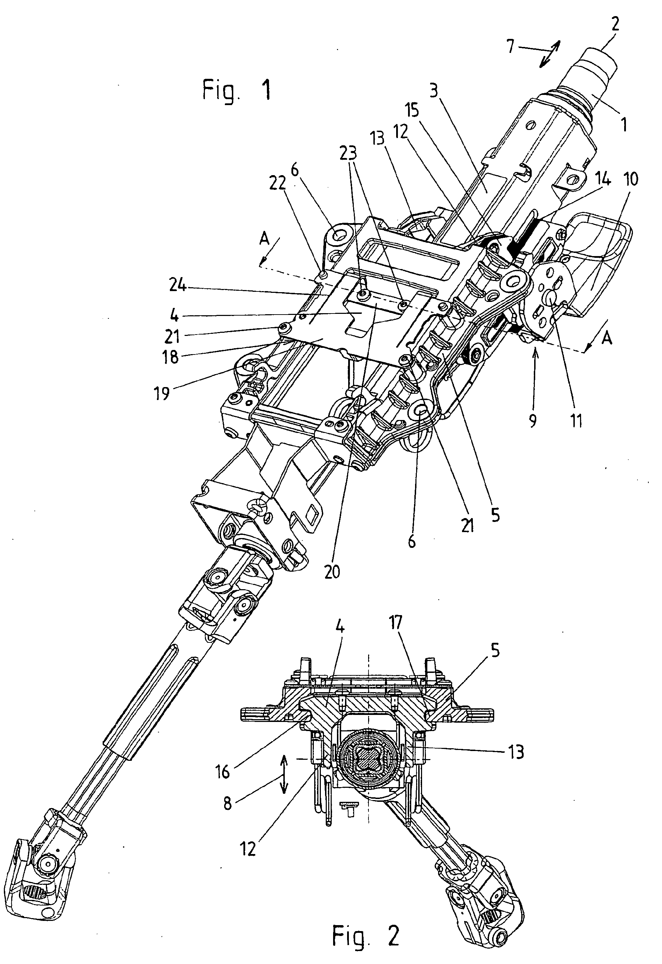

In den Fig. 1 und 2 ist ein Ausführungsbeispiel einer Lenksäule mit einer herkömmlichen Energieabsorptionseinrichtung dargestellt. Die Lenksäule weist eine Lenkspindel 1 auf, die mehrere Lenkspindekeite umfasst, welche jeweils einen Abschnitt der Längserstreckung der Lenkspindel bilden, und an deren fahrerseitigem Ende 2 ein nicht dargestelltes Lenkrad befestigbar ist. Der an dieses Ende 2 anschließende Abschnitt der Lenkspindel 1 ist in einem Mantelrohr 3 drehbar gelagert. Das Mantelrohr 3 und somit auch die Lenkspindel 1 (zumindest in diesem Abschnitt) wird von einer Trageinheit 4 getragen, welche ihrerseits mit einer Montageeinheit 5 verbunden ist, wobei die Montageeinheit 5 am Chassis des Kraftfahrzeugs anzubringen ist, beispielsweise mittels Bohrungen 6 durchsetzender Schraubbolzen.

Das gezeigte Ausführungsbeispiel der Lenksäule ist in Längsrichtung 7 (= in achsialer Richtung) der Lenkspindel 1, die in Fig. 1 durch einen Doppelpfeil angedeutet ist, und in der Neigung bzw. Höhe verstellbar, wobei diese Verstellrichtung 8 in Fig. 2 durch einen Doppelpfeil dargestellt ist. In der Länge und/oder Neigung bzw. Höhe verstellbare Lenksäulen sind in unterschiedlichen Ausführungsformen bekannt. Im gezeigten Ausführungsbeispiel ist ein reibschlüssig wirkender Spannmechanismus 9 vorhanden, in dessen geöffnetem Zustand das Mantelrohr 3 gegenüber der Trageinheit 4 in Längsrichtung 7 der Lenkspindel 1 und in die Verstellrichtung 8 verstellbar ist und in dessen geschlossenem Zustand das Mantelrohr 3 mit der Trageinheit 4 verspannt ist. Zum Öffnen und Schließen des Spannmechanismus 9 dient ein Spannhebel 10. Der Spannmechanismus 9 umfasst einen Spannbolzen 11, der Langlöcher in Seitenwangen 12, 13 der Trageinheit 4 und im Mantelrohr 3 durchsetzt. Das Mantelrohr 3 liegt zwischen den Seitenwangen 12, 13 der Trageinheit 4 und die parallel zu den Verstellrichtungen ausgerichteten Langlöcher in den Seitenwangen 12, 13 und im Mantelrohr 3 kreuzen einander. Weiters sind zur Bereitstellung zusätzlicher Reibflächen an zumindest einer der Seitenwangen 12, 13 und am Mantelrohr 3 angebrachte Lamellen 14, 15 vorhanden, die einander nach Art einer Lamellenkupplung sandwichartig kreuzend durchsetzen. Derartige Verstelleinrichtungen sind bekannt und die Verstelleinrichtung muss an dieser Stelle nicht in weiterem Detail erläutert werden. Anstelle einer reibschlüssig wirkenden Verstelleinrichtung könnten auch formschlüssig wirkende Verstelleinrichtungen eingesetzt werden, wie diese ebenfalls bekannt sind. Auch Kombinationen von reibschlüssig und formschlüssig wirkenden Verstelleinrichtungen wurden bereits vorgeschlagen und könnten eingesetzt werden.

Die Trageinheit 4 ist mit der Montageeinheit 5 durch eine Verschiebeführung verbunden, durch welche die Trageinheit 4 gegenüber der Montageeinheit 5 in Längsrichtung 7 der Lenkspindel 1 verschiebbar geführt ist. Die Trageinheit 4 könnte somit auch als von der Montageeinheit 5 geführter Schlitten bezeichnet werden. Im gezeigten Ausführungsbeispiel weist hierzu die Trageinheit 4 beidseitig in Längsrichtung 7 der Lenkspindel 1 verlaufende Nuten auf, in welche gegeneinander gerichtete Vorsprünge 16, 17 der Montageeinheit 5 eingreifen. Auch andere Ausbildungen für eine Verschiebeführung der Trageinheit 4 gegenüber der Montageeinheit 5 in Längsrichtung 7 der Lenkspindel 1 sind denkbar und möglich, beispielsweise könnten auch an der Trageinheit 4 beidseitig voneinander weggerichtete Vorsprünge angeordnet sein, die in Längsnuten der Montageeinheit 5 eingreifen.

Zwischen der Montageeinheit 5 und der Trageinheit 4 wirkt weiters eine Energieabsorptionseinrichtung 18, die bei den Darstellungen gemäß Fig. 1 und Fig. 2 in herkömmlicher Weise ausgebildet ist und von einem Blechteil 19 mit einem umgebogenen Endabschnitt 20 gebildet wird. Der Hauptabschnitt des Blechteils 19 ist mittels Bolzen 21, 22 an der Montageeinheit 5 befestigt. Der umgebogene Endabschnitt 20 ist mittels Bohrungen durchsetzender Bolzen 23 an der Trageinheit 4 befestigt. Weiters sind in Längsrichtung 7 verlaufende Einkerbungen 24 vorhanden.

Im Normalbetrieb verhindert das Blechteil 19 eine Verschiebung der Trageinheit 4 gegenüber der Montageeinheit 5. Im Crashfall kann durch eine auf die Trageinheit 4 in Richtung zum vorderen Ende der Lenkspindel 1 (welches dem lenkradseitigen Ende 2 gegenüberliegt) gerichtete, auf die Trageinheit 3 wirkende Kraft das Blechteil 19 entlang der Einkerbungen 24 einreißen und die Trageinheit 4 gegenüber der Montageeinheit 5 verschoben werden, wobei durch Biegung des Blechteils 19 Biegearbeit geleistet wird. Die Biegeachse des Blechteils 19 verschiebt sich hierbei in Richtung zum vorderen Ende der Lenksäule. Durch das Aufreißen in Kombination mit der Biegung des Blechteils 19 wird in kontrollierter Weise Energie absorbiert. Durch die Biegung wird hierbei der überwiegende Anteil der Energieabsorption aufgebracht. Bei der Verschiebung der Trageinheit 4 gegenüber der Montageeinheit 5 schieben sich auch mindestens zwei Lenkspindelteile, die im Schnitt von Fig. 2 sichtbar sind, teleskopartig ineinander.

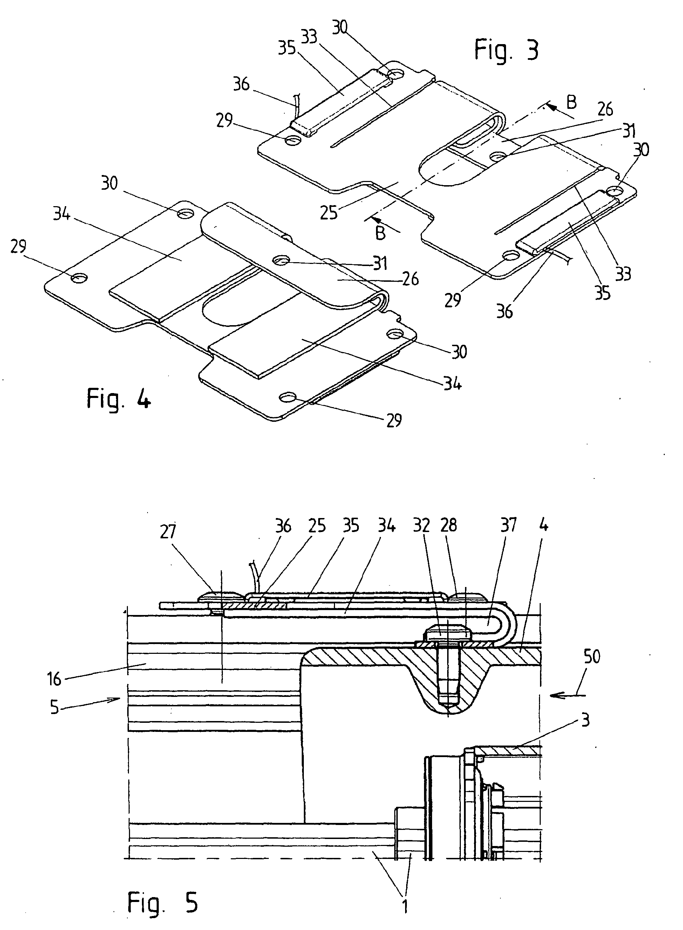

Eine erfindungsgemäße Energieabsorptionseinrichtung 18, die bei einer Lenksäule gemäß der Erfindung anstelle der zuvor beschriebenen herkömmlichen Energieabsorptionseinrichtung 18 eingesetzt wird, ist in den Fig. 3 bis 5 dargestellt. Die Lenksäule kann im Übrigen in der gleichen Weise wie in den Fig. 1 und 2 dargestellt und zuvor beschrieben ausgebildet sein. Im Zusammenhang mit der Erfindung insbesondere relevante Teile der Lenksäule sind in Fig. 5 nochmals schematisch dargestellt,

Die Energieabsorptionseinrichtung 18 gemäß den Fig. 3 bis 5 weist ein Trägerteil 25 mit einem umgebogenen Endabschnitt 26 auf, wobei der Endabschnitt 26 über einen Biegeabschnitt mit einem Hauptabschnitt des Trägerteils 25 verbunden ist. Der Biegeabschnitt ist über 180° umgebogen, wobei er vorzugsweise einen gleichförmigen Biegeradius aufweist.

Der Hauptabschnitt kann zur Befestigung an der Montageeinheit 5 beispielsweise Bohrungen 29, 30 aufweisen, durch welche er mittels Bolzen 27, 28 an der Montageeinheit 5 befestigbar ist. Der Endabschnitt 26 kann zur Befestigung an der Trageinheit 4 beispielsweise mindestens eine Bohrung 31 aufweisen, durch welche er mittels eines Bolzens 32 an der Trageinheit 4 befestigbar ist.

An einer Hauptseite des Trägerteils 25 sind in Längsrichtung 7 der Lenkspindel 1 verlaufende Einkerbungen 33 vorhanden, welche bei der Verschiebung der Trageinheit 4 gegenüber der Montageeinheit 5 Aufreißlinien bilden. Der Endabschnitt 26 ist hierbei schmaler als der Hauptabschnitt des Trägerteils 25 und die Einkerbungen 33 setzen die Breite des Endabschnitts 26 über den Hauptabschnitt fort.

Die Energieabsorptionseinrichtung 18 umfasst weiters zwei Energieabsorptionsteile 34, die jeweils in Form einer sich in Längsrichtung 7 der Lenkspindel 1 erstreckenden streifenförmigen Platte ausgebildet sind und am Trägerteil 25 mit einer ihrer Hauptflächen anliegend angebracht sind, d. h. die Energieabsorptionseinrichtung ist im Bereich der Energieabsorptionsteile 34 zweilagig ausgebildet. Hierbei erstrecken sich die Energieabsorptionsteile über den Hauptteil, den Biegeabschnitt und den umgebogenen Endabschnitt 26 und sind um die gleiche Biegeachse 37, die rechtwinklig zur Lenkspindel 1 liegt, umgebogen wie das Trägerteile 25. Die Energieabsorptionsteile 34 bestehen aus einem magnetorheologischen Elastomer. Die Elastizität bzw. Steifigkeit der Energieabsorptionsteile 34 ist somit durch ein Magnetfeld variabler Stärke variierbar.

Weiters sind am Trägerteil 25 Elektromagneten 35 angebracht. Diese dienen zur Beaufschlagung der Energieabsorptionsteile 34 mit einem anpassbaren magnetischen Feld. Abschnitte von Anschlussleitungen 36 zur Stromversorgung der Elektromagneten 35 sind in den Fig. 3 und 5 eingezeichnet.

Die beiden Elektromagnete 35 sind im gezeigten Ausführungsbeispiel seitlich neben den Einkerbungen 33 in einem bei der Verschiebung der Trageinheit 4 gegenüber der Montageeinheit 5 unverbogenen Bereich des Trägerteils 25 angebracht. Beispielsweise können die Elektromagneten 35 streifenförmig ausgebildet sein, um einen möglichst großen Abschnitt eines jeweiligen Energieabsorptionsteils 34 mit einem Magnetfeld entsprechender Stärke beaufschlagen zu können.

Im Normalbetrieb verhindert die Energieabsorptionseinrichtung 18 eine Verschiebung der Trageinheit 4 gegenüber der Montageeinheit 5. Im Crashfall wird die Haltekraft der Energieabsorptionseinrichtung 18 überschritten und es kann zu einer Verschiebung der Trageinheit 4 gegenüber der Montageeinheit 5 kommen. Die parallel zur Längsrichtung 7 der Lenkspindel 1 liegende Bewegungsrichtung 50 der Trageinheit 4 ist in Fig. 5 durch einen Pfeil dargestellt. Dadurch reißt das Trägerteil 25 entlang der Einkerbungen 33 zunehmend ein und der umgebogene Abschnitt des Trägerteils 25 verschiebt sich in Richtung zum vorderen Ende der Lenkspindel 1. Hierbei verschiebt sich auch der umgebogene Bereich eines jeweiligen Energieabsorptionsteils 34, welches zusammen mit dem Trägerteil 25 gebogen wird, in Richtung zum vorderen Ende der Lenkspindel 1. Durch das Aufreißen des Trägerteils 25 und die Biegungen des Trägerteils 25 und der Energieabsorptionsteile 34 wird somit bei der Verschiebung der Trageinheit 4 gegenüber der Montageeinheit 5 Energie absorbiert. Die Größe der Energieabsorption ist hierbei mittels der Elektromagneten 35 einstellbar. Durch eine Veränderung des magnetischen Feldes, mit dem die Energieabsorptionsteile 34 beaufschlagt werden, kann die Elastizität der Energieabsorptionsteile 34 verändert werden. Durch eine solche Beeinflussung der Steifigkeit der Energieabsorptionsteile 34 kann die Kraft beeinflusst werden, welche für ihre Biegung erforderlich ist und somit die bei der Biegung absorbierte Energie.

Beispielsweise kann das Magnetfeld, mit dem die Energieabsorptionsteile 34 beaufschlagt werden, in Abhängigkeit vom Gewicht des Fahrers eingestellt werden. Zu diesem Zweck kann im Fahrersitz ein Gewichtsensor angeordnet sein und die Größe des Magnetfelds in Abhängigkeit vom ausgegebenen Wert des Gewichtsensors in vorgegebener Weise angepasst werden. Eine optimale Energieabsorption für Fahrer mit unterschiedlichem Körpergewicht kann dadurch erreicht werden.

Weitere Parameter, die für die Einstellung der Stärke des Magnetfelds herangezogen werden können, sind beispielsweise der Zustand, ob der Fahrer angeschnallt ist oder nicht, die Fahrzeuggeschwindigkeit, der Aufprallwinkel, die Sitzposition des Lenkers (beispielsweise mittels einer Kamera und einer Bildauswertung) usw. Diese Parameter können einzeln oder in verschiedenen Kombinationen zusätzlich zum Fahrergewicht oder auch anstelle von diesem zur Einstellung der Energieabsorption herangezogen werden.

Insbesondere kann jedoch das Magnetfeld und damit die bei der Biegung absorbierte Energie auch während des Crashs variiert werden und damit ein definierter Kraftverlauf eingestellt werden.

Anstelle von zwei zusammen mit dem Trägerteil 25 umgebogenen Energieabsorptionsteilen 34 aus magnetorheologischen Elastomer können auch mehr als zwei oder nur ein solches Energieabsorptionsteil eingesetzt werden. Im Ausführungsbeispiel gemäß den Fig. 3 bis 5 erfolgt eine "freie Biegung" des Trägerteils 25 zusammen mit dem mindestens einen Energieabsorptionsteil 34. Statt dessen könnten das Trägerteil 25 und das Energieabsorptionsteil 34 auch um eine Kante herumgezogen werden. Beispielsweise könnte der Endabschnitt 26 des Trägerteils 25 an einer der beiden Einheiten 4 oder 5 befestigt sein und der umgebogene Teil um eine Kante des anderen der beiden Teile herumgezogen werden, wenn sich die Trageinheit 4 gegenüber der Montageeinheit 5 verschiebt.

Die Elektromagneten 35 könnten auch in anderer Weise angeordnet sein und mehr als zwei oder nur ein Elektromagnet 35 könnte vorgesehen sein. Auch andere Einrichtungen zur Erzeugung eines variierbaren magnetischen Feldes könnten eingesetzt werden, beispielsweise in ihrer Lage zueinander veränderbare Permanentmagneten.

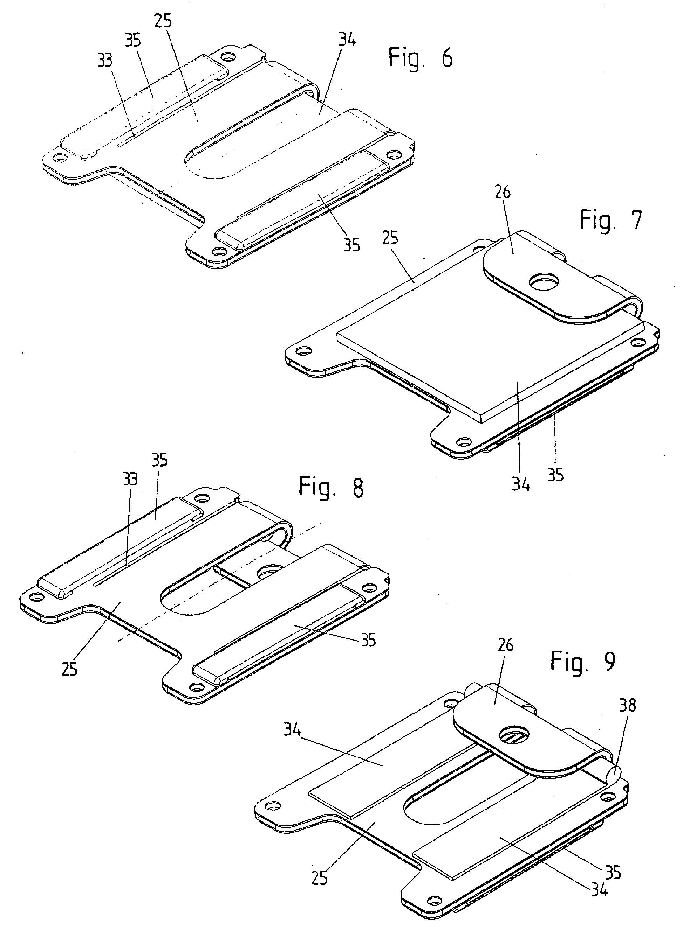

Eine weitere Ausführungsform einer Energieabsorptionseinrichtung gemäß der Erfindung, die beispielsweise bei der in den Fig. 1 und 2 dargestellten Lenksäule einsetzbar ist, ist in den Fig. 6 und 7 dargestellt. Das Trägerteil 25 ist in der gleichen Weise wie bei der zuvor beschriebenen Ausführungsform ausgebildet. Am Trägerteil ist bei dieser Ausführungsform nur ein einzelnes, plattenförmiges Energieabsorptionsteil 34 aus magnetorheologischem Elastomer angebracht, welches im unverformten Zustand der.Energieabsorptionseinrichtung eben ausgebildet ist und sich bis zum umgebogenen Abschnitt des Energieabsorptionsteils erstreckt. Im Crashfall verbiegt sich wiederum das Energieabsorptionsteil 34 zusammen mit dem Trägerteil 25 um eine gemeinsame Biegeachse 37.

Bei der weiteren, in den Fig. 8 und 9 dargestellten Ausführungsvariante sind wiederum zwei streifenförmige Energieabsorptionsteile 34 aus magnetorheologischem Elastomer am Trägerteil 25 angebracht, die sich im unverformten Zustand der Energieabsorptionseinrichtung bis zum Biegebereich des Trägerteils 25 erstrecken und dort eine Endwulst 38 aufweisen. Auch hier erfolgt im Crashfall eine gemeinsame Biegung der Energieabsorptionsteile 34 und des Trägerteils 25.

Es ist jedoch prinzipiell möglich auf das Trägerteil 25 zu verzichten und nur das Elastomer umzuformen. Mittels losbrechender Nieten, Kapseln oder Klemmungen, die die Trageinheit 4 gegenüber der Montageeinheit 5 im Normalfall halten, kann ein gewünschtes Losbrechmoment erreicht werden.

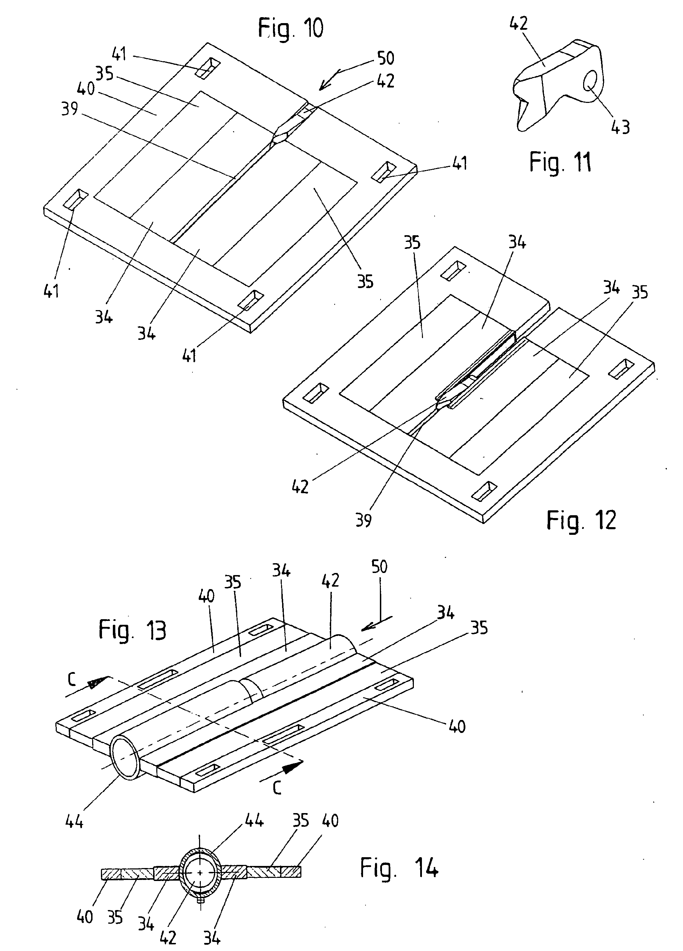

In den Fig. 10 bis 12 ist ein weiteres Ausführungsbeispiel einer Energieabsorptionseinrichtung gemäß der Erfindung dargestellt, welche beispielsweise bei der in den Fig. 1 und 2 dargestellten Lenksäule einsetzbar ist. Bei dieser Ausführungsform sind zwei Energieabsorptionsteile 34 aus magnetorheologischem Elastomer vorhanden, die einen schlitzförmigen Zwischenraum 39 zwischen sich einschließen, welcher sich in Längsrichtung 7 der Lenkspindel 1 erstreckt. Die Energieabsorptionsteile 34 sind mittels eines rahmenförmigen Halteteils 40, in welchem sie angeordnet sind, an der Montageeinheit 5 in Längsrichtung 7 der Lenkspindel 1 unverschiebbar befestigt. Das Halteteil 40 ist an der Montageeinheit 5 befestigt, z. B. weist es hierzu Bohrungen 41 auf, welche zur Befestigung an der Montageeinheit 5 mittels Bolzen dienen.

Vom Halteteil 40 ist weiters mindestens ein Elektromagnet 35, im gezeigten Ausführungsbeispiel zwei Elektromagneten 35, gehalten, um die Energieabsorptionsteile 34 mit einem anpassbaren Magnetfeld zu beaufschlagen. Diese Elektromagneten 35 sind in den Fig. 10 und 12 nur schematisch dargestellt.

Ein Kompressionsteil 42 ist an der Trageinheit 4 derart festgelegt, dass es in Längsrichtung 7 der Lenkspindel 1 gegenüber der Trageinheit 4 unverschiebbar zu dieser ist. Zu diesem Zweck dient beispielsweise eine Bohrung 43, die von einem an der Trageinheit 4 festgelegten Querbolzen durchsetzt wird (nicht dargestellt in den Fig. 10 bis 12). An der dem Zwischenraum 39 zugewandten Seite ist das Kompressionsteil mit einer keilförmigen Verjüngung versehen. Wenn sich im Crashfall die Trageinheit 4 gegenüber der Montageeinheit 5 verschiebt (in die parallel zur Längsrichtung 7 der Lenkspindel 1 liegende Bewegungsrichtung 50), so fährt das Kompressionsteil 42 in den schlitzförmigen Zwischenraum 39 zwischen den Energieabsorptionsteilen 34 ein und weitet diesen hierbei unter Kompression des Materials der Energieabsorptionsteile 34 auf. Das heißt, dass die Kompression des Energieabsorptionsteils 34 durch das Einfahren des Kompressionsteils 42 in Richtung quer zur Längsrichtung 7 der Bewegungsrichtung 50 der Lenkspindel 1 erfolgt. In Fig. 12 ist dieser eingefahrene Zustand dargestellt, wobei zur Verdeutlichung der Zwischenraum 39 über die gesamte Länge, über welche das Kompressionsteil 42 eingefahren ist, verbreitert dargestellt ist. Tatsächlich wird sich die Verbreiterung hinter dem eingefahrenen Kompressionsteil 42 aufgrund der Elastizität der Energieabsorptionsteile 34 wiederum zurückbilden.

Mittels der Elektromagneten 35 kann die Elastizität bzw. Steifigkeit der Energieabsorptionsteile 34 und somit die für die Kompression der Energieabsorptionsteile 34 erforderliche Arbeit angepasst werden, um die Energieabsorption auf einen gewünschten Wert einzustellen.

Anstelle von zwei separaten Energieabsorptionsteilen 34, die den Zwischenraum 39 zwischen sich einschließen, könnte auch ein Schlitz in einem einzelnen Energieabsorptionsteil 34 vorhanden sein, in den das Kompressionsteil 42 im Crashfall einfährt.

Bei der in den Fig. 13 bis 16 dargestellten Ausführungsvariante der Erfindung erfolgt die Energieabsorption ebenfalls unter Kompression mindestens eines aus einem magnetorheologischen Material bestehenden Energieabsorptionsteils 34. Im Unterschied zum zuvor beschriebenen Ausführungsbeispiel ist hier im Zwischenraum 39 ein Führungsteil 44 für das Kompressionsteil 42 vorhanden. Das Führungsteil besitzt einen in Richtung zum Kompressionsteil 42 offenen Aufnahmeraum für das Kompressionsteil 42. Im Ausführungsbeispiel weist es im unverformten Zustand einen ovalen Querschnitt auf, wie dies aus Fig. 14 ersichtlich ist, während das Kompressionsteil 42 einen kreisrunden Querschnitt aufweist mit einem Durchmesser, der abgesehen von einem Spiel dem Innendurchmesser entlang der großen Längsachse des Führungsteils 44 entspricht. An seinem dem Führungsteil zugewandten Ende besitzt das Kompressionsteil 42 eine Verjüngung mit einer Einlaufschräge.

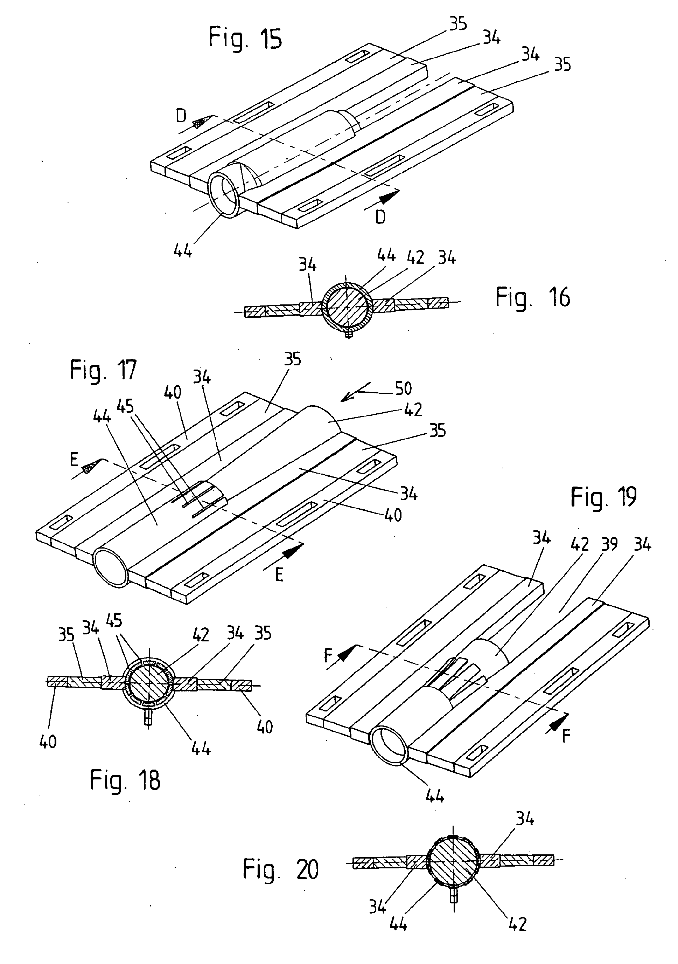

Im Crashfall, wenn sich die Trageinheit 4 gegenüber der Montageeinheit 5 verschiebt, läuft das Kompressionsteil 42 in das Führungsteil 44 ein und verformt dieses auf eine seiner Außenkontur entsprechende Form (vgl. Fig. 15 und 16). Hierbei werden die beidseitig des Führungsteils 44 angeordneten Energieabsorptionsteile 34 oder die beidseitig des Führungsteils 44 liegenden Abschnitte eines einzelnen einen Schlitz aufweisenden Energieabsorptionsteils 34 komprimiert. Die hierbei geleistete Arbeit kann durch Variation eines magnetischen Feldes, insbesondere mittels Elektromagneten 35, an die Erfordernisse angepasst werden.

Von der Erfindung umfasst sind dabei verschiedene Anordnungen des Energieabsorptionsteils 34 in Bezug auf die Lage der im Fahrzeug eingebauten Lenksäule. So können zwei Energieabsorptionsteile 34 in Richtung quer zur Verstellrichtung 18 in Bezug auf die Höhe der Lenksäule zur Lenkspindel beabstandet angeordnet sein. Es ist dabei auch denkbar und möglich nur ein oder mehr als zwei Energieabsorptionsteile 34 vorzusehen. Alternativ kann das Energieabsorptionsteil in Richtung der Verstellrichtung 18 in Bezug auf die Höhe der Lenksäule beabstandet von der Lenkspindel angeordnet sein. In beiden Fällen ist eine einfache Integration der jeweiligen Energieabsorptionsteile 34 in die Montageeinheit 5 möglich. Darüber hinaus könnte, im Falle das die Trageinheit 4 sich im Crashfall nicht gegenüber der Montageeinheit 5 verschieben soll, das Energieabsorptionsteil auch in die Trageinheit 4 integriert werden. Dabei können im einfachsten Fall die Langlöcher, die parallel zu einer Verstellrichtung liegen durch entsprechende magnetorheologische Elastomere begrenzt sein und damit das Energieabsorptionsteil bilden. Im einfachsten Fall dient entsprechend der Spannbolzen 11 als Kompressionsteil 42. Im Falle, dass der Spannmechanismus der Lenksäule geöffnet ist, wird eine entsprechende Bestromung der Spulen, die das magnetorheologische Elastomer ansteuern unterbrochen oder die entsprechende Bestromung wird ausschließlich im Crashfall eingeschaltet. Eine Kombination der sehr verschiedenen erläuterten Varianten ist einfach denkbar und möglich.

Ein ähnliches Ausführungsbeispiel wie das zuvor beschriebene Ausführungsbeispiel ist in den Fig. 17 bis 20 dargestellt. Das Kompressionsteil 42 ist hier insgesamt konisch ausgebildet und das mit kreisringförmigem Querschnitt ausgebildete Führungsteil 44 weist auf der dem Kompressionsteil 42 zugewandten Seite achsiale Einschnitte 45 auf. Beim Einlaufen des Kompressionsteils 42 in das Führungsteil 44 kommt es wiederum zur Kompression des Materials des mindestens einen Energieabsorptionsteils 34.

Bei den in den Fig. 10 bis 20 beschriebenen Ausführungsbeispielen könnte jeweils auch nur auf einer Seite des Kompressionsteils 42 ein durch das Kompressionsteil 42 bei der Verschiebung der Trageinheit 4 gegenüber der Montageeinheit 5 komprimiertes Energieabsorptionsteil 34 vorhanden sein.

Ebenso ist es auch denkbar und möglich, bei diesen Ausführungsbeispielen das Kompressionsteil 42 aus einem magnetorheologischen Elastomer auszubilden und das Energieabsorptionsteil 34 aus einem nicht magnetorheologischen Werkstoff. Das Kompressionsteil 42 würde in diesem Fall ebenfalls ein Energieabsorptionsteil darstellen.

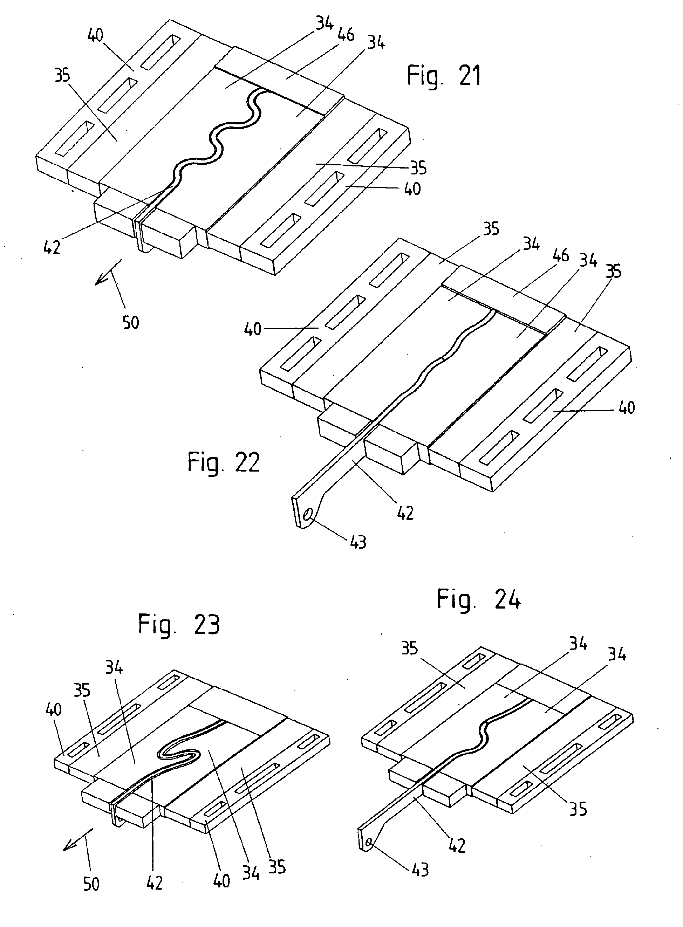

Ein weiteres Ausführungsbeispiel einer Energieabsorptionseinrichtung gemäß der Erfindung, die z.B. bei der in den Fig. 1 und 2 dargestellten Lenksäule einsetzbar ist, ist in den Fig. 21 und 22 dargestellt. Fig. 21 zeigt den Ausgangszustand. In einem Zwischenraum zwischen zwei Energieabsorptionsteilen 34 aus magnetorheologischem Elastomer ist ein Kompressionsteil 42 angeordnet, welches hier bandförmig ausgebildet ist. Die Energieabsorptionsteile 34 sind mittels Halteteilen 40 an der Montageeinheit 5 befestigt, wobei beidseitig der Energieabsorptionsteile 34 wiederum Elektromagneten 35 angeordnet sind. Das eine Ende des bandförmigen Kompressionsteils 42 ist an einem mit dem Halteteil 40 unverschiebbar verbundenen Befestigungsteil 46 befestigt. Das andere Ende des Kompressionsteils 42 ist an der Trageinheit 4 befestigt. Der Zwischenraum 39 und das durch ihn geführte Kompressionsteil 42 haben im Ausgangszustand einen wellenförmigen Verlauf, vgl. Fig. 21.

Im Crashfall kommt es zu einer Bewegung des mit der Trageinheit 4 verbundenen Endes des Kompressionsteils 42 in die Bewegungsrichtung 50. Dadurch streckt sich das Kompressionsteil 42 unter Verringerung seiner Wellung, sodass es sich zumindest abschnittsweise in eine winklig zur Längsrichtung 7 der Lenkspindel 1 liegende Richtung verschiebt, wodurch es zur Kompression der Energieabsorptionsteile 34 kommt.

Der Zwischenraum, in dem das Kompressionsteil 42 geführt ist, könnte wiederum von einem Schlitz in einem einzelnen Energieabsorptionsteil 34 gebildet sein.

Eine ähnliche Ausführungsform ist in den Fig. 23 und 24 dargestellt. Wiederum ist ein bandförmiges Kompressionsteil 42 in einem Zwischenraum 39 mit einem kurvigen Verlauf geführt. Das Kompressionsteil 42 ist hierbei so stark gekrümmt, dass es einen rückläufigen Abschnitt aufweist. Bei der Streckung des Kompressionsteils kommt es dadurch auch zu Kompressionskomponenten, die in Längsrichtung 7 der Lenkspindel 1 ausgerichtet sind.

Auch hier könnte das Kompressionsteil 42 als magnetorheologisches Elastomer ausgebildet sein und ein Energieabsorptionsteil bilden, während das Energieabsorptionsteil 34 aus einem nicht magnetorheologischen Werkstoff besteht.

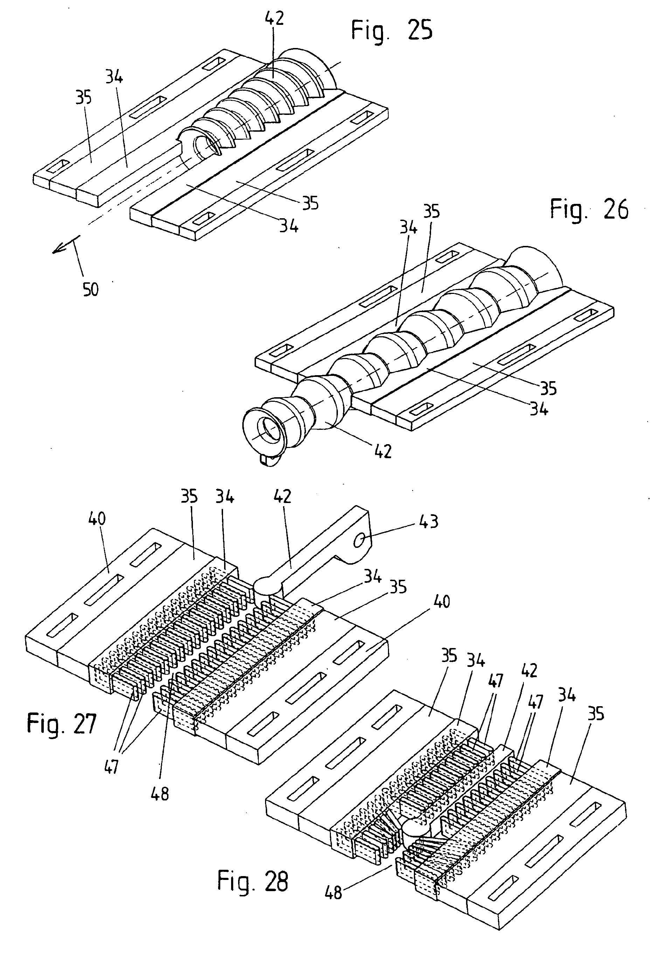

Beim Ausführungsbeispiel gemäß den Fig. 25 und 26 wird das Kompressionsteil 42 von einem Wellenbalg gebildet. Die beidseitig des Wellenbalges liegenden Energieabsorptionsteile 34 aus magnetorheologischem Elastomer folgen im entspannten Ausgangszustand dem wellenförmigen Verlauf des Wellenbalges, vgl. Fig. 25. Im Crashfall wird der Wellenbalg gestreckt, wobei sich seine Wellung verflacht und er die beiden beidseitig von ihm angeordneten Energieabsorptionsteile 34 komprimiert.

Beim in den Fig. 27 und 28 dargestellten Ausführungsbeispiel sind in die beiden aus magnetorheologischem Elastomer Energieabsorptionsteile 34, die über Halteteile 40 mit der Montageeinheit 5 der Lenksäule verbunden sind, Widerstandselemente 47 eingebettet, von denen freie Abschnitte aus den Energieabsorptionsteilen 34 herausstehen. Im gezeigten Ausführungsbeispiel werden diese Widerstandselemente 47 von abgeflachten geraden Metallteilen gebildet. Die freien Enden der Widerstandselemente 47, die im einen Energieabsorptionsteil 34 eingebettet sind, schließen mit den freien Enden der im anderen Energieabsorptionsteil 34 eingebetteten Widerstandselemente 47 einen Zwischenraum 48 zwischen sich ein. In diesen ist im Crashfall bei einer Verschiebung der Trageinheit 4 gegenüber der Montageeinheit 5 ein Schubteil 52 einfahrbar (Bewegungsrichtung 50), wobei das Schubteil 52 eine größere Breite als die Breite des Zwischenraums 48 im entspannten Zustand der Energieabsorptionsteile 34 aufweist. Die Widerstandselemente 47 werden somit beim Einfahren des Schubteils 52 ausgelenkt, wobei ihre in den Energieabsorptionsteilen 34 eingebetteten Abschnitte das Material der Energieabsorptionsteile 34 verformt (unter Kompression und Dehnung des Materials). Hierdurch wird Energie absorbiert. Diese Energieabsorption ist mittels Elektromagneten 36 einstellbar.

Im gezeigten Ausführungsbeispiel weist das Schubteil 52 einen vergrößerten Kopfabschnitt, dessen Breite größer als die Breite des Zwischenraums 48 ist, und daran anschließend einen Halsabschnitt auf, dessen Breite geringer als die Breite des Zwischenraums 48 ist. Die Widerstandselemente 47 können sich somit nach dem Durchfahren des Kopfabschnitts wiederum aufgrund der Elastizität der Energieabsorptionsteile 34 in ihre ursprüngliche Stellung zurückstellen.

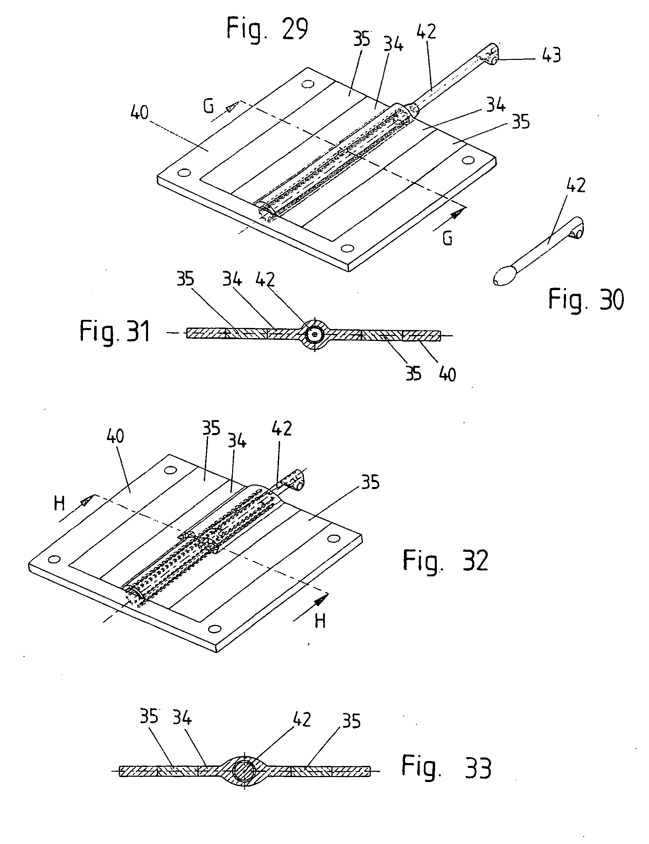

Bei dem in den Fig. 29 bis 33 dargestellten Ausführungsbeispiel fährt ähnlich wie bei den Ausführungsbeispielen gemäß den Fig. 13 bis 20 im Crashfall ein Kompressionsteil 42 unter Kompression des Materials des Energieabsorptionsteils 34 ein. Das aus magnetorheologischem Elastomer bestehende Energieabsorptionsteil 34 weist bei dieser Ausführungsform aber einen inneren Hohlraum auf, in welchen das Kompressionsteil 42 einfährt. In diesem Hohlraum ist ein Führungsteil 44 angeordnet, welches von einem in Längsrichtung in mehrere Segmente geschlitzten Röhrchen gebildet wird. Beim Einfahren des Kompressionsteils 42 wird das Führungsteil 44 aufgeweitet, wobei beidseits des Führungsteils 44 das Material des Energieabsorptionsteils 34 komprimiert wird.

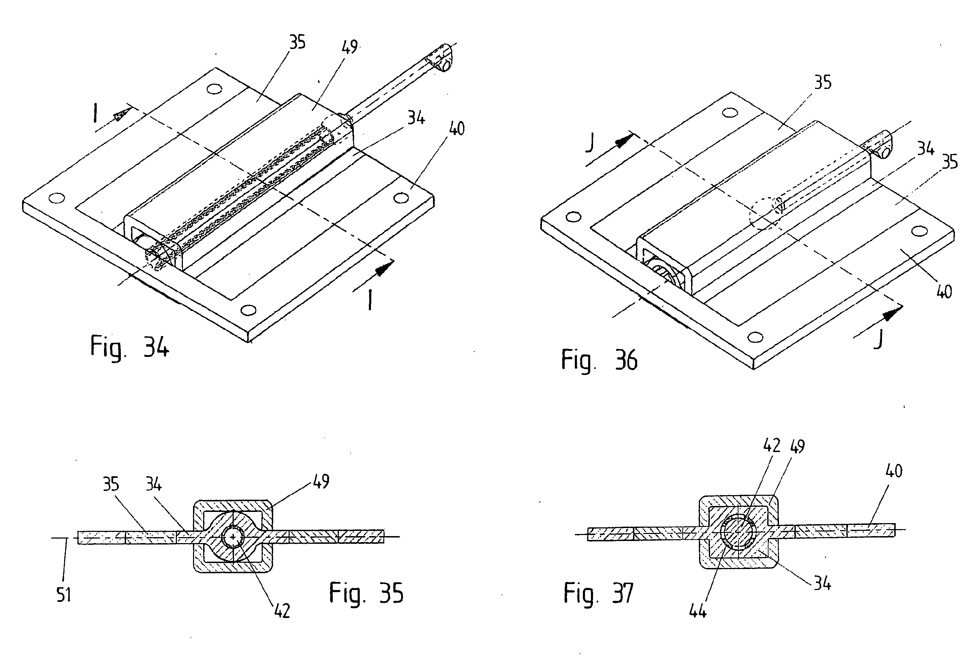

Fig. 34 zeigt ein ähnliches Ausführungsbeispiel, wobei aber im Bereich des Hohlraums des Energieabsorptionsteils 34 zusätzliche Halteteile 49 vorhanden sind, die das Energieabsorptionsteil 34 umgeben. Es wird dadurch eine von den Halteteilen 49 umgebene Hohlkammer ausgebildet, so dass es beim Einfahren des Kompressionsteils 42 parallel und senkrecht zur Ebene 51 zu einer Kompression des Materials des Energieabsorptionsteils 34 kommt. Durch einen Variation des das Energieabsorptionsteil 34 beaufschlagenden Magnetfelds kann die hierbei aufgebrauchte Absorptionsenergie wiederum eingestellt werden.

In allen beschriebenen Ausführungsbeispielen bestehen die Energieabsorptionsteile 34 bevorzugterweise aus einem magnetorheologischen Elastomer, dessen Elastizität sich in Abhängigkeit vom einwirkenden Magnetfeld ändert. Es ist jedoch auch denkbar und möglich, das Kompressionsteil 42 aus einem magnetorheologischen Elastomer auszubilden, wobei das Kompressionsteil 42 ein Energieabsorptionsteil bildet, und/oder das Energieabsorptionsteil 34 aus einem nicht magnetorheologischen Werkstoff auszubilden.

Bei allen beschriebenen Ausführungsformen kann die Verbindung mit der Montageeinheit 5 und der Trageinheit 4 auch vertauscht werden, d.h. das an der Montageeinheit 5 befestigte Teil (Hauptteil des Trägerteils 25 oder Halteteil 40) kann an der Trageinheit 4 befestigt werden und das an der Trageinheit 4 befestigte Teil (umgebogener Abschnitt 26 des Trägerteils 25 oder Kompressionsteil 42 oder Schubteil 52) kann an der Montageeinheit 5 befestigt werden.

Statt mindestens eines Elektromagnets 35 könnte auch einen andere Einrichtung zur Erzeugung eines veränderbaren magnetischen Feldes eingesetzt werden, beispielsweise Permanentmagnete, die in ihrer Lage zueinander veränderbar sind.

Auch wenn die Erfindung im Zusammenhang mit einer sowohl in der Länge als auch in der Neigung bzw. Höhe verstellbaren Lenksäule beschrieben worden ist, kann die Erfindung ebenso bei einer nur in einer Verstellrichtung verstellbaren Lenksäule oder einer unverstellbaren Lenksäule eingesetzt werden.

### Legende

### zu den Hinweisziffern:

- 1: Lenkspindel
- 2: Ende
- 3: Mantelrohr
- 4: Trageinheit
- 5: Montageeinheit
- 6: Bohrung
- 7: Längsrichtung
- 8: Verstellrichtung
- 9: Spannmechanismus
- 10: Spannhebel
- 11: Spannbolzen
- 12: Seitenwange
- 13: Seitenwange
- 14: Lamelle
- 15: Lamelle
- 16: Vorsprung
- 17: Vorsprung
- 18: Energieabsorptionseinrichtung
- 19: Blechteil
- 20: Endabschnitt
- 21: Bolzen
- 22: Bolzen
- 23: Bolzen
- 24: Einkerbung
- 25: Trägerteil
- 26: Endabschnitt
- 27: Bolzen
- 28: Bolzen
- 29: Bohrung
- 30: Bohrung
- 32: Bolzen
- 33: Einkerbung
- 34: Energieabsorptionsteil
- 35: Elektromagnet
- 36: Anschlussleitung
- 37: Biegeachse
- 38: Endwulst
- 39: Zwischenraum
- 40: Halteteil
- 41: Bohrung
- 42: Kompressionsteil
- 43: Bohrung
- 44: Führungsteil
- 45: Einschnitt
- 46: Befestigungsteil
- 47: Widerstandselement
- 48: Zwischenraum
- 49: Halteteil
- 50: Bewegungsrichtung
- 51: Ebene
- 52: Schubteil

## Patentansprüche

1. Lenksäule für ein Kraftfahrzeug mit einer drehbar gelagerten Lenkspindel (1), einer die Lenkspindel (1) tragenden Trageinheit (4) und einer Montageeinheit (5) zur Befestigung der Lenkspindel (19 am Chassis des Kraftfahrzeugs, wobei die Trageinheit (4) im Crashfall gegenüber der Montageeinheit (5) verschiebbar ist und eine zwischen der Trageinheit (4) und Montageeinheit (5) wirkende Energieabsorptionseinrichtung (18) zur Energieabsorption bei der Verschiebung der Trageinheit (4) gegenüber der Montageeinheit (5) im Crashfall vorhanden ist, **dadurch gekennzeichnet, dass** mindestens ein bei der Verschiebung der Trageinheit (4) gegenüber der Montageeinheit (5) verformbares Energieabsorptionsteil (34) der Energieabsorptionseinrichtung (18) aus einem magnetorheologischen Elastomer besteht und dass die Energieabsorptionseinrichtung (18) eine Einrichtung zur Erzeugung eines magnetischen Feldes umfasst, mittels der das aus dem magnetorheologischen Elastomer bestehende Energieabsorptionsteil (34) zumindest bereichsweise mit einem veränderbaren magnetischen Feld beaufschlagbar ist.

2. Lenksäule nach Anspruch 1, **dadurch gekennzeichnet, dass** das aus einem magnetorheologischen Elastomer bestehende Energieabsorptionsteil (34) bei der Verschiebung der Trageinheit (4) gegenüber der Montageeinheit (5) eine Biegung erfährt.

3. Lenksäule nach Anspruch 2, **dadurch gekennzeichnet, dass** das Energieabsorptionsteil (34) plattenförmig oder in Form eines in Längsrichtung (7) der Lenkspindel (1) sich erstreckenden Streifens ausgebildet ist und die Biegung bei der Verschiebung der Trageinheit (4) gegenüber der Montageeinheit (5) um eine rechtwinklig zur Längsrichtung (7) der Lenkspindel (1) liegende Biegeachse (37) erfolgt.

4. Lenksäule nach Anspruch 3, **dadurch gekennzeichnet, dass** das Energieabsorptionsteil (34) an einem Trägerteil (25), vorzugsweise aus Metall, angebracht ist, welches einerseits mit der Trageinheit (4), andererseits mit der Montageeinheit (5) verbunden ist, wobei vorzugsweise die Biegung des Energieabsorptionsteils (34) zusammen mit einer Biegung des Trägerteils (25) erfolgt.

5. Lenksäule nach Anspruch 4, **dadurch gekennzeichnet, dass** das Trägerteil (25) plattenförmig ausgebildet ist und dass ein Hauptabschnitt des Trägerteils (25) an der Montageeinheit (5) oder an der Trageinheit (4) angebracht ist und ein umgebogener Endabschnitt (26) des Trägerteils (25) an der anderen dieser beiden Einheiten (4, 5) angebracht ist.

6. Lenksäule nach Anspruch 1, **dadurch gekennzeichnet, dass** durch ein bei der Verschiebung der Trageinheit (4) gegenüber der Manteleinheit (5) sich gegenüber dem mindestens einen aus einem magnetorheologischen Elastomer bestehenden Energieabsorptionsteil (34) bewegendes Kompressionsteil (42) eine Kompression des Energieabsorptionsteils (34) erfolgt.

7. Lenksäule nach Anspruch 6, **dadurch gekennzeichnet, dass** sich das Kompressionsteil (42) bei der Verschiebung der Trageinheit (4) gegenüber der Montageeinheit (5) in Längsrichtung (7) der Lenkspindel (1) verschiebt.

8. Lenksäule nach Anspruch 7, **dadurch gekennzeichnet, dass** das Kompressionsteil (42) an seinem bezogen auf seine Verschieberichtung gegenüber dem Energieabsorptionsteil (34) vorderen Ende eine, vorzugsweise keilförmige, Verjüngung aufweist.

9. Lenksäule nach einem der Ansprüche 6 bis 8, **dadurch gekennzeichnet, dass** das Kompressionsteil (42) auf mindestens eine in Längsrichtung (7) der Lenkspindel (1) sich erstreckende Oberfläche des Energieabsorptionsteils (34) komprimierend einwirkt.

10. Lenksäule nach einem der Ansprüche 6 bis 9, **dadurch gekennzeichnet, dass** sich das Kompressionsteil (42) zumindest während eines Abschnitts seiner Verschiebung gegenüber dem mindestens einen Energieabsorptionsteil (34) in einem sich in Längsrichtung (7) der Lenkspindel (1) erstreckenden Zwischenraum oder Hohlraum zwischen zwei Energieabsorptionsteilen oder einem sich in Längsrichtung (7) der Lenkspindel (1) erstreckenden Längsschlitz oder Hohlraum eines einzelnen Energieabsorptionsteils (34) befindet, wobei vorzugsweise im Zwischenraum, Hohlraum oder Längsschlitz mindestens ein Führungsteil (44) für das Kompressionsteil (42) angeordnet ist, welches dem Kompressionsteil (42) und dem mindestens einen Energieabsorptionsteil (34) zwischengeschaltet ist.

11. Lenksäule nach Anspruch 10, **dadurch gekennzeichnet, dass** das Führungsteil (44) einen Aufnahmeraum für das Kompressionsteil (42) aufweist, in den das Kompressionsteil (42) bei der Verschiebung der Trageinheit (4) gegenüber der Montageeinheit (5) unter Verformung des Führungsteils (44) einfährt.

12. Lenksäule nach Anspruch 6, **dadurch gekennzeichnet, dass** sich das Kompressionsteil (42) bei einer Verschiebung der Trageinheit (4) gegenüber der Montageeinheit (5) zumindest abschnittsweise in eine Richtung verschiebt, die winklig zur Längsrichtung (7) der Lenkspindel (1) liegt.

13. Lenksäule nach Anspruch 12, **dadurch gekennzeichnet, dass** das Kompressionsteil (42) von einem Band gebildet wird, welches in einem Zwischenraum zwischen zwei aus einem magnetorheologischen Elastomer bestehenden Energieabsorptionsteilen (34) oder in einem Schlitz eines einzelnen aus einem magnetorheologischen Elastomer bestehenden Energieabsorptionsteils (34) geführt ist, wobei dieser Zwischenraum oder Schlitz mindestens eine, vorzugsweise mehrere entgegengesetzt gerichtete, Krümmungen aufweist, und dass das Band mit seinem einen Ende in Längsrichtung (7) der Lenkspindel (1) unverschiebbar an der Montageeinheit (5) oder der Trageinheit (4) und mit seinem anderen Ende in Längsrichtung (7) der Lenkspindel (1) unverschiebbar an der anderen dieser beiden Einheiten (4, 5) gehalten ist.

14. Lenksäule nach Anspruch 12, **dadurch gekennzeichnet, dass** das Kompressionsteil (42) von einem Wellenbalg gebildet wird, der im Zwischenraum zwischen zwei aus einem magnetorheologischen Elastomer bestehenden Energieabsorptionsteilen (34) oder in einem Schlitz eines einzelnen aus einem magnetorheologischen Elastomer bestehenden Energieabsorptionsteils (34) angeordnet ist und der mit seinem einen Ende in Längsrichtung (7) der Lenkspindel (1) unverschiebbar mit der Montageeinheit (5) oder der Trageinheit (4) und mit seinem anderen Ende in Längsrichtung (7) der Lenkspindel (1) unverschiebbar mit der anderen dieser beiden Einheiten (4, 5) verbunden ist.

15. Lenksäule nach Anspruch 1, **dadurch gekennzeichnet, dass** in mindestens einem aus einem magnetorheologischen Elastomer bestehenden Energieabsorptionsteil (34) Widerstandselemente (47) eingebettet sind, die mit ihren freien Enden aus dem Energieabsorptionsteil (34) herausstehen, wobei die Widerstandselemente (47) bei der Verschiebung der Trageinheit (4) gegenüber der Montageeinheit (5) durch ein Schubteil (52) unter Verformung des Materials des Energieabsorptionsteils (34) auslenkbar sind.

## Claims

1. A steering column for a motor vehicle, having a rotatably mounted steering spindle (1), a supporting unit (4), supporting the steering spindle (1), and a mounting unit (5) for securing the steering spindle (1) to the chassis of the motor vehicle, wherein the supporting unit (4) is displaceable with respect to the mounting unit (5) in the event of a crash and an energy absorption device (18), acting between the supporting unit (4) and the mounting unit (5), for energy absorption upon displacement of the supporting unit (4) with respect to the mounting unit (5) in the event of a crash is present, **characterised in that** at least one energy absorption part (34), deformable upon displacement of the supporting unit (4) with respect to the mounting unit (5), of the energy absorption device (18) consists of a magnetorheological elastomer and **in that** the energy absorption device (18) comprises a device for generating a magnetic field, by means of which at least regions of the energy absorption part (34) consisting of the magnetorheological elastomer can be acted upon by an alterable magnetic field.

2. A steering column according to claim 1, **characterised in that** the energy absorption part (34) consisting of a magnetorheological elastomer undergoes bending upon displacement of the supporting unit (4) with respect to the mounting unit (5).

3. A steering column according to claim 2, **characterised in that** the energy absorption part (34) is plate-shaped or in the form of a strip extending in the longitudinal direction (7) of the steering spindle (1) and the bending upon displacement of the supporting unit (4) with respect to the mounting unit (5) takes place about a bending axis (37) lying at right angles to the longitudinal direction (7) of the steering spindle (1).

4. A steering column according to claim 3, **characterised in that** the energy absorption part (34) is attached to a support part (25), preferably of metal, which is connected on the one hand to the supporting unit (4) and on the other hand to the mounting unit (5), wherein the bending of the energy absorption part (34) preferably takes place together with a bending of the support part (25).

5. A steering column according to claim 4, **characterised in that** the support part (25) is plate-shaped and **in that** a main portion of the support part (25) is attached to the mounting unit (5) or to the supporting unit (4) and a bent-over end portion (26) of the support part (25) is attached to the other one of these two units (4, 5).

6. A steering column according to claim 1, **characterised in that** compression of the energy absorption part (34) takes place through a compression part (42) moving, upon displacement of the supporting unit (4) with respect to the mounting unit (5), with respect to the at least one energy absorption part (34) consisting of a magnetorheological elastomer.

7. A steering column according to claim 6, **characterised in that** upon displacement of the supporting unit (4) with respect to the mounting unit (5), the compression part (42) moves in the longitudinal direction (7) of the steering spindle (1).

8. A steering column according to claim 7, **characterised in that** at its front end, related to its displacement direction with respect to the energy absorption device (34), the compression part (42) has a, preferably wedge-shaped, taper.

9. A steering column according to any one of claims 6 to 8, **characterised in that** the compression part (42) acts in a compressing manner upon at least one surface, extending in the longitudinal direction (7) of the steering spindle (1), of the energy absorption part (34).

10. A steering column according to any one of claims 6 to 9, **characterised in that** during at least a portion of its displacement with respect to the at least one energy absorption part (34), the compression part (42) is located in a clearance or hollow space, extending in the longitudinal direction (7) of the steering spindle (1), between two energy absorption parts or in a longitudinal slot or hollow space, extending in the longitudinal direction (7) of the steering spindle (1), of an individual energy absorption part (34), wherein preferably at least one guide part (44) for the compression part (42) is arranged in the clearance, hollow space or longitudinal slot, which guide part (44) is interposed between the compression part (42) and the at least one energy absorption part (34).

11. A steering column according to claim 10, **characterised in that** the guide part (44) has a receiving space for the compression part (42), into which the compression part (42) travels, accompanied by deformation of the guide part (44), upon displacement of the supporting unit (4) with respect to the mounting unit (5).

12. A steering column according to claim 6, **characterised in that** upon displacement of the supporting unit (4) with respect to the mounting unit (5), the compression part (42) moves at least in sections in a direction lying at an angle to the longitudinal direction (7) of the steering spindle (1).

13. A steering column according to claim 12, **characterised in that** the compression part (42) is formed by a band which is guided in a clearance between two energy absorption parts (34) consisting of a magnetorheological elastomer or in a slot of an individual energy absorption part (34) consisting of a magnetorheological elastomer, wherein this clearance or slot has at least one, preferably a plurality, of curves directed in opposite directions, and **in that** the band is held by its one end on the mounting unit (5) or the supporting unit (4) so as to be immovable in the longitudinal direction (7) of the steering spindle (1) and is held by its other end on the other one of these two units (4, 5) so as to be immovable in the longitudinal direction (7) of the steering spindle (1).

14. A steering column according to claim 12, **characterised in that** the compression part (42) is formed by a concertina bellows, which is arranged in the clearance between two energy absorption parts (34) consisting of a magnetorheological elastomer or in a slot of an individual energy absorption part (34) consisting of a magnetorheological elastomer and which is connected by its one end to the mounting unit (5) or the supporting unit (4) so as to be immovable in the longitudinal direction (7) of the steering spindle (1) and by its other end to the other one of these two units (4, 5) so as to be immovable in the longitudinal direction (7) of the steering spindle (1).

15. A steering column according to claim 1, **characterised in that** resistance elements (47) are embedded in at least one energy absorption part (34) consisting of a magnetorheological elastomer, the free ends of which resistance elements (47) project from the energy absorption part (34), wherein upon displacement of the supporting unit (4) with respect to the mounting unit (5), the resistance elements (47) can, accompanied by deformation of the material of the energy absorption part (34), be deflected by a pushing part (52).

## Revendications

1. Colonne de direction de véhicule automobile comportant une broche de direction (1) montée à rotation, une unité de support (4) portant la broche de direction (1) et une unité de montage (5) pour fixer la broche de direction (19) au châssis du véhicule automobile,
en cas de collision, l'unité de support (4) coulisse par rapport à l'unité de montage (5) et une installation d'absorption d'énergie (18) agit entre l'unité de support (4) et l'unité de montage (5) pour absorber l'énergie lors du coulissement de l'unité de support (4) par rapport à l'unité de montage (5),
**caractérisée en ce qu'**
au moins une pièce d'absorption d'énergie (34) déformable lors du coulissement de l'unité de support (4) par rapport à l'unité de montage (5) dans l'installation d'absorption d'énergie (18) est réalisée en un élastomère magnétorhéologique, et
l'installation d'absorption d'énergie (18) comprend une installation pour générer un champ magnétique et elle sollicite la pièce absorbant l'énergie (34) en un élastomère magnétorhéologique, au moins par zones par un champ magnétique variable.

2. Colonne de direction selon la revendication 1,
**caractérisée en ce que**
la pièce absorbant l'énergie (34) réalisée en un élastomère magnétorhéologique, subit un pliage lors du coulissement de l'unité de support (4) par rapport à l'unité de montage (5).

3. Colonne de direction selon la revendication 2,
**caractérisée en ce que**
la pièce absorbant l'énergie (34) est réalisée en forme de plaque ou en forme de bande s'étendant dans la direction longitudinale (7) de la colonne de direction (1), et
le pliage lors du coulissement de l'unité de support (4) par rapport à l'unité de montage (5) se fait autour d'un axe de pliage (37) perpendiculaire à la direction longitudinale (7) de la colonne de direction (1).

4. Colonne de direction selon la revendication 3,
**caractérisée en ce que**
la pièce absorbant l'énergie (34) est installée sur une pièce de support (25) de préférence en métal qui est reliée d'une part à l'unité de support (4) et d'autre part à l'unité de montage (5), et
de préférence le pliage de la pièce absorbant l'énergie (34) se fait avec pliage de la pièce de support (25).

5. Colonne de direction selon la revendication 4,
**caractérisée en ce que**
la pièce de support (25) est en forme de plaque, et
un segment principal de la pièce de support (25) est installé sur l'unité de montage (5) ou sur l'unité de support (4) et un segment d'extrémité (26) recourbé de la pièce de support (25), est prévu sur l'autre des deux unités (4, 5).

6. Colonne de direction selon la revendication 1,
**caractérisée en ce qu'**
lors du coulissement de l'unité de support (4) par rapport à l'unité de montage (5), une pièce de compression (42) qui se déplace par rapport à au moins une pièce absorbant l'énergie (34) réalisée en un élastomère magnétorhéologique comprime la pièce d'absorption d'énergie (34).

7. Colonne de direction selon la revendication 6,
**caractérisée en ce que**
lors du coulissement de l'unité de support (4) par rapport à l'unité de montage (5), la pièce de compression (42) coulisse dans la direction longitudinale (7) de la colonne de direction (1).

8. Colonne de direction selon la revendication 7,
**caractérisée en ce qu'**
à son extrémité avant rapportée à sa direction de coulissement par rapport à la pièce absorbant l'énergie (34), la pièce de compression (42) présente un rétrécissement, de préférence en forme de coin.

9. Colonne de direction selon l'une des revendications 6 à 8,
**caractérisée en ce que**
la pièce de compression (42) agit sur au moins une surface supérieure de la pièce absorbant l'énergie (34) s'étendant dans la direction longitudinale (7) de la broche de direction (1).

10. Colonne de direction selon l'une des revendications 6 à 9,
**caractérisée en ce qu'**
au moins pendant un segment de son coulissement par rapport à au moins une pièce absorbant l'énergie (34), la pièce de compression (42) se trouve dans l'espace intermédiaire s'étendant dans la direction longitudinale (7) de la broche de direction (1) ou une cavité entre deux pièces absorbant l'énergie ou une fente longitudinale ou cavité d'une seule pièce absorbant l'énergie (34), et s'étendant dans la direction longitudinale (7) de la colonne de direction (1), et
de préférence dans l'intervalle, dans la cavité ou dans la fente longitudinale, il y a au moins une pièce de guidage (44) pour la pièce de compression (42), cette pièce de guidage étant interposée entre la pièce de compression (42) et au moins une pièce absorbant l'énergie (34).

11. Colonne de direction selon la revendication 10,
**caractérisée en ce que**
la pièce de guidage (44) comporte une cavité de réception pour la pièce de compression (42) dans laquelle la pièce de compression (42) pénètre en déformant la pièce de guidage (44) lors du coulissement de l'unité de support (4) par rapport à l'unité de montage (5).

12. Colonne de direction selon la revendication 6,
**caractérisée en ce que**
lors du coulissement de l'unité de support (4) par rapport à l'unité de montage (5), la pièce de compression (42) se déplace au moins par segments dans une direction perpendiculaire à la direction longitudinale (7) de la colonne de direction (1).

13. Colonne de direction selon la revendication 12,
**caractérisée en ce que**
la pièce de compression (42) est formée dans une bande guidée dans un espace intermédiaire entre deux pièces absorbant l'énergie (34) réalisées en un élastomère magnétorhéologique ou dans la fente d'une seule pièce absorbant l'énergie (34) réalisée en un élastomère magnétorhéologique,
cet intervalle ou cette fente ayant au moins une courbure et de préférence plusieurs courbures de direction opposée, et
par l'une de ses extrémités dans la direction longitudinale (7) de la colonne de direction (1), la bande est tenue de façon non coulissante à l'unité de montage (5) ou à l'unité de support (4) et par son autre extrémité dans la direction longitudinale (7) de la colonne de direction (1), elle est tenue de manière fixe à l'autre de ces deux unités (4, 5).

14. Colonne de direction selon la revendication 12,
**caractérisée en ce que**
la pièce de compression (42) est formée d'un soufflet à ondulation installé dans l'intervalle entre deux pièces absorbant l'énergie (34) réalisées en élastomère magnétorhéologique ou dans la fente d'une seule pièce absorbant l'énergie (34) en élastomère magnétorhéologique et qui est reliée par l'une de ses extrémités, de façon non coulissante dans la direction longitudinale (7) de la colonne de direction (1) à l'unité de montage (5) ou à l'unité de support (4) et par son autre extrémité, elle est reliée de façon fixe dans la direction longitudinale (7) de la colonne de direction (1), à l'autre de ces deux unités (4, 5).

15. Colonne de direction selon la revendication 1,
**caractérisée en ce que**
dans au moins une pièce absorbant l'énergie (34) réalisée en un élastomère magnétorhéologique, on a intégré des éléments résistant (47) dont les extrémités libres dépassent de la pièce absorbant l'énergie (34),
les éléments résistant (47) étant déviés lors du coulissement de l'unité de support (4) par rapport à l'unité de montage (5) par une pièce de poussée (52) avec déformation de la matière de la pièce absorbant l'énergie (34).
